# EUROPÄISCHE PATENTSCHRIFT

(11) **EP 1 649 967 B1**
(45) Veröffentlichungstag und Bekanntmachung des Hinweises auf die Patenterteilung: **10.08.2011**
(21) Anmeldenummer: 04024921.1
(22) Anmeldetag: 20.10.2004
(51) Int. Cl.: B23K 26/42, G02B 7/02

(54) **Optisches Element eines Laserbearbeitungskopfs**
Optical element for a laser machining head
Elément optique pour une tête d'usinage au laser

(43) Veröffentlichungstag der Anmeldung: 26.04.2006
(73) Patentinhaber: TRUMPF Werkzeugmaschinen GmbH + Co. KG, 71254 Ditzingen (DE)
(72) Erfinder: Lambert, Martin, 71404 Korb (DE); Herwerth, Philipp, 70839 Gerlingen (DE)
(74) Vertreter: Kohler Schmid Möbus

(56) Entgegenhaltungen:
- EP-A- 0 974 858
- EP-A- 1 096 415
- US-A- 4 772 772
- US-A- 6 166 868
- US-A1- 2003 095 345
- US-A1- 2003 123 160

## Beschreibung

Die Erfindung betrifft ein system gemäß dem Oberbegriff des Anspruchs 1. Die US 2003/0123160 A1 offenbart ein solches system.

Spiegeloberflächen von nicht planen Spiegeln, wie Umlenkspiegel oder Fokussierspiegel eines Laserbearbeitungskopfs, können meistens visuell nicht unterschieden werden. Eindeutige Merkmale sind derzeit lediglich die Materialnummer oder eine Beschriftung. Diese Beschriftungen werden in einem separaten Arbeitsgang aufgebracht. Daher besteht eine erhebliche Verwechslungsgefahr. Zur optisch korrekten Funktion ist eine definierte Einbaulage und Orientierung des Spiegels notwendig. Trotz Beschriftung ist hier eine Fehlmontage möglich.

Aus der US 2003/0123160 A1 ist eine Vorrichtung zur Führung eines Laserstrahls bekannt, welche wenigstens ein optisches Element aufweist, das zwischen einem Haltelement und einem Stützabschnitt positioniert ist. Weiterhin ist ein Klemmelement vorgesehen, welches das optische Element auf dem Stützabschnitt eines Gehäuseabschnitts fixiert.

Aus der US 2003/0095345 A1 ist es bekannt, durch Vorsehen entsprechender Befestigungsmittel Linsen in einer vorgegebenen Position in einem Linsenhalter zu positionieren. Dies ist so zu verstehen, dass Ausnehmungen entsprechenden Vorsprüngen gegenüberliegend angeordnet werden müssen.

Der Erfindung liegt die Aufgabe zugrunde, ein optisches Element eines Laserbearbeitungskopfs derart auszubilden und ein Einbauverfahren zu entwickeln, dass optische Elemente nur an ihrer Bestimmungsposition eingebaut werden können.

Diese Aufgabe wird durch ein optisches Element mit einer mechanischen Kodierung zur Vorgabe des zulässigen Einbaus des optischen Elements in den Laserbearbeitungskopf mit den Merkmalen des Anspruches 1 gelöst. Die mechanische Kodierung führt zu einer eindeutigen Identifikation des optischen Elements. Der Einbauort des optischen Elements, wie eines Spiegels, am Laserbearbeitungskopf ist so beschaffen, dass nur das richtige optische Element in richtiger Einbaulage eingebaut werden kann. Werden beispielsweise Spiegel zur Reinigung ausgebaut oder Ersatzteile an den Kunden gesendet, so kann auch weniger qualifiziertes Personal die Komponenten ohne Verwechslungsgefahr handhaben.

Neben der somit sichergestellten Funktion der optischen Anordnung ist auch die Zerstörung angrenzender Bauteile durch falsche optische Elemente ausgeschlossen. Beispielsweise würde ein Laserschneidkopfgehäuse durch den Einbau eines Spiegels mit zu langer Brennweite zerstört.

Die mechanische Kodierung kann durch eine Profilierung an dem optischen Element ausgebildet sein. Dies können Zähne, Vorsprünge, eine Wölbung oder Erhöhung oder dergleichen sein, welche in eine entsprechende Vertiefung oder Ausnehmung des Laserbearbeitungskopfs einsetzbar sind. Es versteht sich, dass unter den Schutz der Erfindung auch die Umkehrung der Ausbildung von Profilierung und Vertiefung/Ausnehmung an dem optischen Element bzw. an dem Laserbearbeitungskopf fällt. Es bleibt von dem Schutz der Erfindung umfasst, wenn mindestens eine Profilierung ... und komplementär hierzu mindestens eine mit der Profilierung zusammenwirkende Ausnehmung ... ausgebildet sind.

Bevorzugt ist es, dass das optische Element Gewindebohrungen aufweist, in die Gewindestifte einschraubbar ist. Diese Ausgestaltung ermöglicht es, die Kodierung zu wählen (Anzahl und Position der Stifte) und schnell umsetzen zu können.

Wenn die Gewindestifte eingeklebt sind, ist die Kodierung dauerhaft ausgebildet.

Die Erfindung ist für eine Vielzahl von Bauelementen eines Laserbearbeitungskopfs geeignet, insbesondere für Spiegel. Dieser kann zur Anbringung der Kodierung wie folgt ausgestaltet sein: Der Spiegel ist an einem Träger zur Befestigung am Gehäuse des Laserbearbeitungskopfs angebracht ist, welcher die mechanische Kodierung aufweist.

Ein Ausführungsbeispiel der Erfindung ist in der Zeichnung schematisch dargestellt und wird nachfolgend mit Bezug zu den Figuren der Zeichnung näher erläutert. Es zeigt im Einzelnen:
- **Fig. 1**: den Aufbau einer Laserschneidanlage;
- **Fig. 2**: Teile des Laserschneidkopfs der Laserschneidanlage im Längsschnitt;
- **Fig. 3a**: einen Spiegel des Laserschneidkopfs in der Draufsicht;
- **Fig. 3b**: den Spiegel des Laserschneidkopfs in der Seitenansicht;
- **Fig. 3c**: den Spiegel des Laserschneidkopfs gemäß einem Schnitt nach IIIc-IIIc in Fig. 3a;
- **Fig. 3d**: den Spiegel des Laserschneidkopfs in perspektivischer Darstellung.

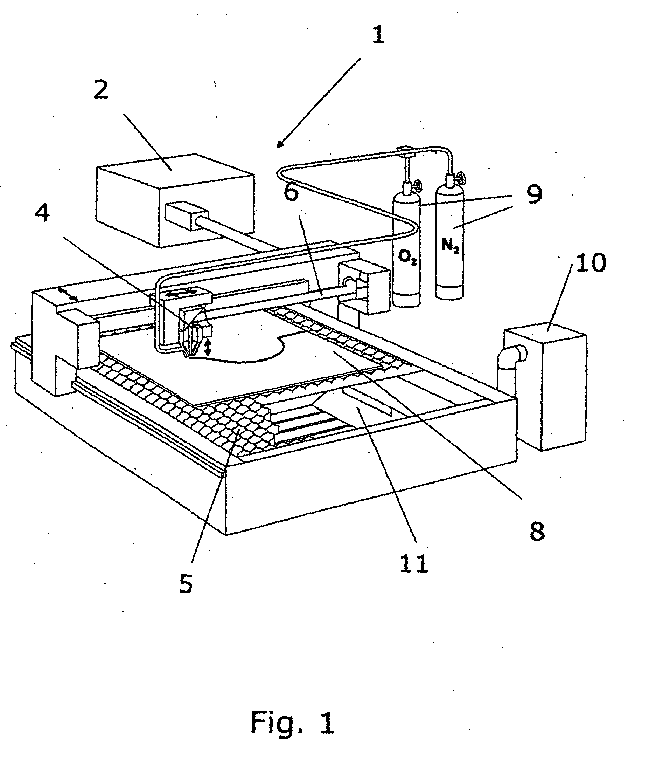

Aus der **Fig. 1** ist der Aufbau einer Laserbearbeitungsanlage **1** zum Laserschneiden mit einem CO₂-Laser **2,** einem Laserbearbeitungskopf **4** und einer Werkstückauflage **5** ersichtlich. Ein erzeugter Laserstrahl **6** wird mithilfe von Umlenkspiegeln zum Laserbearbeitungskopf 4 geführt und mithilfe von Spiegeln auf ein Werkstück **8** gerichtet.

Bevor eine durchgängige Schnittfuge entsteht, muss der Laserstrahl 6 das Werkstück 8 durchdringen. Das Blech 8 muss an einer Stelle punktförmig geschmolzen oder oxidiert werden, und die Schmelze muss ausgeblasen werden. Der Einstechvorgang kann schnell (d.h. mit voller Laserleistung) oder langsam (über eine sog. "Rampe") erfolgen.

Beim langsamen Einstechen mit einer Rampe kann die Laserleistung allmählich erhöht, reduziert und über einen bestimmten Zeitraum konstant gehalten werden, bis das Einstechloch erzeugt ist. Sowohl das Einstechen als auch das Laserschneiden werden durch Hinzufügen eines Gases unterstützt. Als Schneidgase **9** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Beim Schneiden mit Sauerstoff wird in der Regel mit einem Gasdruck von maximal 6 bar gearbeitet. Dort, wo der Laserstrahl 6 auf das Blech 8 auftrifft, wird das Material geschmolzen und zum größten Teil oxidiert. Die entstandene Schmelze wird zusammen mit den Eisenoxiden ausgeblasen. Entstehende Partikel und Gase können mithilfe einer Absaugeinrichtung **10** aus einer Absaugkammer **11** abgesaugt werden. Beim Oxidationsvorgang (exotherme Reaktion) wird zusätzlich Energie frei, die den Schneidprozess begünstig. In den Materialdicken, bei welchen für das Sauerstoffschneiden und das Stickstoff-Hochdruckschneiden dieselbe Laserleistung verwendet werden kann, ist es bei einer Verwendung von Sauerstoff als Schneidgas möglich, mit deutlich höheren Schneidgeschwindigkeiten zu arbeiten oder höhere Materialdicken zu trennen, als es beim Einsatz von Stickstoff der Fall wäre.

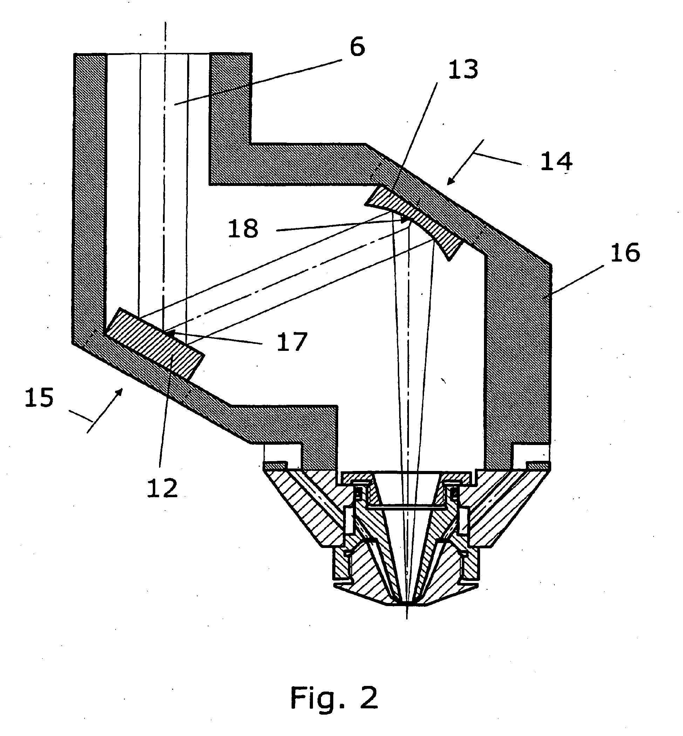

Gemäß **Fig. 2** sind ein Umlenkspiegel **12** und ein Fokussierspiegel **13** vorgesehen, um den Laserstrahl 6 auf das Werkstück zu richten. Mithilfe einer Ringspaltdüse ist es möglich, einen Gasstrahl koaxial zu dem Laserstrahl 6 zu erzeugen, ohne dass dafür ein transmissives Element als Dichtelement zum Druckaufbau benötigt wird. Die beiden Spiegel 12 und 13 werden in Pfeilrichtung **14** bzw. **15** in Aufnahmen eines Gehäuses **16** eingesetzt. In der Fig. 2 sind die beiden Spiegel 12 und 13 zur Verdeutlichung ihrer Funktion unterschiedlich dargestellt. In der Realität sind die Spiegel 12 und 13 nahezu identisch ausgebildet und weisen lediglich eine unterschiedliche Spiegeloberfläche **17** bzw. **18** auf.

Am Beispiel des Umlenkspiegels 12 wird erläutert, dass die beiden Spiegel zur Unterscheidung eine mechanische Kodierung besitzen:

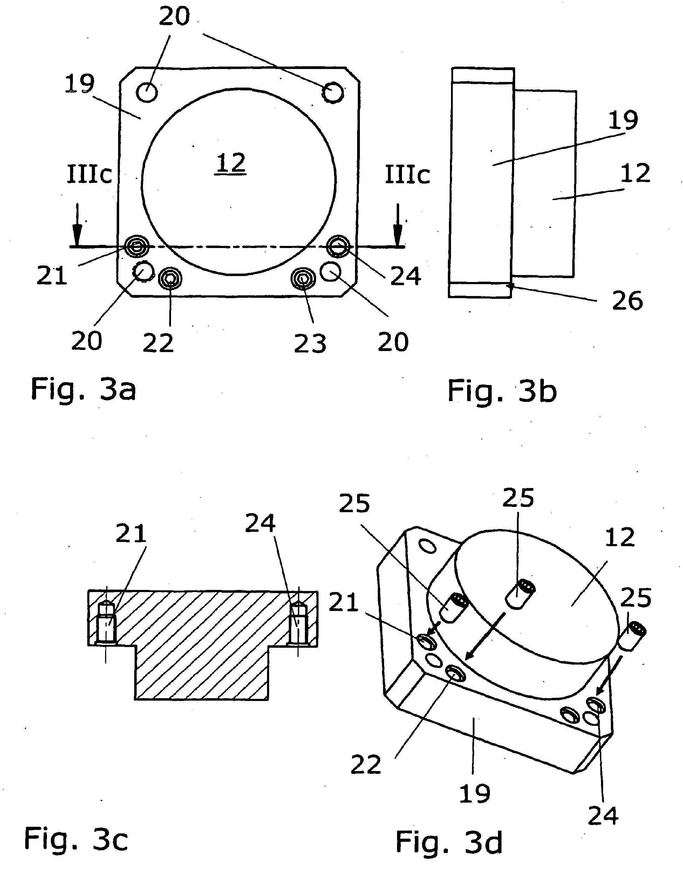

Gemäß **Fig. 3a** bis **Fig. 3d** ist der Umlenkspiegel 12 an einem Träger **19** angebracht, welcher in die Aufnahme des Gehäuses des Laserschneidkopfs eingesetzt wird. Der Träger 19 kann über Bohrungen **20** an dem Gehäuse befestigt werden. Der Träger 19 weist zusätzlich Gewindebohrungen **21** bis **24** auf, in die Gewindestifte **25** eingesetzt und verklebt werden können, so dass die Gewindestifte aus dem Träger 19 herausragen und von dessen Trägeroberfläche **26** vorstehen. Die mechanische Kodierung besteht aus der Anzahl und Position der Gewindestifte. Die Aufnahme am Laserschneidkopf besitzt entsprechend der Kodierung mindestens eine Vertiefung zum Einführen eines Gewindestiftes. Eine mögliche Kodierung kann beispielsweise darin bestehen, dass Gewindestifte in die Bohrungen 21, 22 und 24 eingesetzt sind und drei entsprechende Vertiefungen am Gehäuse des Laserschneidkopfs vorhanden sind.

### BEZUGSZEICHENLISTE

- 1: Laserbearbeitungsanlage
- 2: Laser
- 3:
- 4: Laserbearbeitungskopf
- 5: Werkstückauflage
- 6: Laserstrahl
- 7:
- 8: Werkstück
- 9: Schneidgas
- 10: Absaugeinrichtung
- 11: Absaugkammer
- 12: Umlenkspiegel
- 13: Fokussierspiegel
- 14: Einbaurichtung
- 15: Einbaurichtung
- 16: Gehäuse
- 17: Spiegeloberfläche
- 18: Spiegeloberfläche
- 19: Träger
- 20: Bohrung
- 21: Gewindebohrung
- 22: Gewindebohrung
- 23: Gewindebohrung
- 24: Gewindebohrung
- 25: Gewindestift
- 26: Trägeroberfläche

## Patentansprüche

1. System, umfassend einen Laserbearbeitungskopf (4) und mehrere optische Elemente (12, 13) des Laserbearbeitungskopfs (4), **gekennzeichnet durch** eine die optischen Elemente (12, 13) eindeutig identifizierende mechanische Kodierung zur Vorgabe des zulässigen Einbauortes und der Einbaulage der optischen Elemente (12, 13) in den Laserbearbeitungskopf (4), wobei die Kodierung
a) als Profilierung, Zähne, Vorsprünge, Wölbung, Erhöhung oder Stift an dem optischen Element (12, 13) ausgebildet ist, die in eine entsprechende Vertiefung oder Ausnehmung des Laserbearbeitungskopfs (4) einsetzbar ist; oder
b) als Profilierung, Zähne, Vorsprünge, Wölbung, Erhöhung oder Stift an dem Laserbearbeitungskopf (4) ausgebildet ist, die in eine entsprechende Vertiefung oder Ausnehmung des optischen Elements (12, 13) einsetzbar ist.

2. System nach Anspruch 1, **dadurch gekennzeichnet, dass** das optische Element (12, 13) Gewindebohrungen (21, 22, 23, 24) aufweist, in die Gewindestifte (25) einschraubbar sind.

3. System nach Anspruch 2, **dadurch gekennzeichnet, dass** die Gewindestifte (25) eingeklebt sind.

4. System nach einem der vorhergehenden Ansprüche, **dadurch gekennzeichnet, dass** das optische Element (12, 13) ein Spiegel Ist.

5. System nach Anspruch 4, **dadurch gekennzeichnet, dass** der Spiegel (12) an einem Träger (19) zur Befestigung am Gehäuse (16) des Laserbearbeitungskopfs (4) angebracht ist, welcher die mechanische Kodierung aufweist.

## Claims

1. System comprising a laser processing head (4) and several optical elements (12, 13) of the laser processing head (4), **characterized by** a mechanical encoding that unambiguously identifies the optical elements (12, 13) for specifying the admissible installation location and installation position of the optical elements (12, 13) in the laser processing head (4), wherein the encoding
a) is designed as profile, teeth, projections, curvature, elevation or pin on the optical element (12, 13), which can be inserted into a corresponding depression or recess of the laser processing head (4); or
b) is designed as profile, teeth, projections, curvature, elevation or pin on the laser processing head (4), which can be inserted into a corresponding depression or recess of the optical element (12, 13).

2. System according to claim 1, **characterized in that** the optical element (12, 13) has threaded holes (21, 22, 23, 24) into which threaded pins (25) can be screwed.

3. System according to claim 2, **characterized in that** the threaded pins (25) are glued in.

4. System according to any one of the preceding claims, **characterized in that** the optical element (12, 13) is a mirror.

5. System according to claim 4, **characterized in that** the mirror (12) is mounted to a carrier (19) to be mounted to the housing (16) of the laser processing head (4) which comprises the mechanical encoding.

## Revendications

1. Système comprenant une tête d'usinage au laser (4) et plusieurs éléments optiques (12, 13) de la tête d'usinage au laser (4), **caractérisé par** un codage mécanique identifiant de manière univoque les éléments optiques (12, 13) pour définir le lieu d'installation admissible et la position d'installation des éléments optiques (12, 13) dans la tête d'usinage au laser (4), ledit codage
a) étant réalisé sous la forme d'un profilage, de dents, de saillies, d'une courbure, d'un bossage ou d'une tige sur l'élément optique (12, 13), qui peut être insére(e) dans un creux ou un évidement correspondant de la tête d'usinage au laser (4) ; ou
b) étant réalisé sous la forme d'un profilage, de dents, de saillies, d'une courbure, d'un bossage ou d'une tige sur la tête d'usinage au laser (4), qui peut être inséré(e) dans un creux ou un évidement correspondant de l'élément optique (12, 13).

2. Système selon la revendication 1, **caractérisé en ce que** l'élément optique (12, 13) présente des trous filetés (21, 22, 23, 24) dans lesquels des tiges filetées (25) peuvent être vissées.

3. Système selon la revendication 2, **caractérisé en ce que** les tiges filetées (25) sont collées.

4. Système selon une des revendications précédentes, **caractérisé en ce que** l'élément optique (12, 13) est un miroir.

5. Système selon la revendication 4, **caractérisé en ce que** le miroir (12) est monté sur un support (19) pour la fixation au boîtier (16) de la tête d'usinage au laser (4), lequel présente le codage mécanique.
